# EUROPEAN PATENT APPLICATION

(11) **EP 4 706 799 A1**
(43) Date of publication of application: **11.03.2026**
(21) Application number: 24199103.3
(22) Date of filing: 09.09.2024
(51) Int. Cl.: B01D 46/00, B01D 46/10, H01M 50/308, H01M 50/30

(54) **FILTER DEVICE AND BATTERY HOUSING WITH FILTER DEVICE**

(71) Applicant: MANN+HUMMEL GmbH, 71636 Ludwigsburg (DE)
(72) Inventor: ZBIRAL, Robert, 71636 Ludwigsburg (DE)
(74) Representative: Mann + Hummel Intellectual Property

(57) **Abstract**

A filter device (100) for filtering a fluid stream of a battery housing (60), in particular of a traction battery of a motor vehicle, the filter device (100) comprising a circumferential extending cover (10) comprising a fluid passage (22) and surrounding an interior space (28), and a filter element (30) at least partially filling the interior space (28), the fluid passage (22) being for fluid passing through the filter element (30). The cover (10) is configured to accommodate a seat for the filter element (30) via a circumferential extending filter sealing element (34), and to accommodate a seat for a circumferential extending sealing element (20).

## Description

### Technical Field

Embodiments relate to a filter device for filtering a fluid stream of a battery housing, in particular of a traction battery of a motor vehicle, as well as a battery housing, in particular of a traction battery of a motor vehicle, with a pressure relief valve and a filter device for filtering a fluid stream.

### Background Art

Battery electric storage systems used as stationary systems or as traction batteries for vehicles contain a certain number of battery cells.

In the event of a malfunction hot gases and particles may escape from the battery cells. Surface filters for a certain size of particles in combination with an overpressure valve are described for example in US 11811085 B2 and US 2022223974 A1. Examples of different particle filters, not in connection with an overpressure valve are described in WO 23078700 A2, DE 102021100659 A1, WO23078651 A2. A depth filtration is not described therein.

Further, DE 102021128950 A1 describes a three stage particle separation for battery packs, wherein at least one step of the configuration is a depth filtration.

CN 213782150 U describes a battery box having an overpressure valve on a wall, and a filter cover being provided on the valve. The filter consists of a first filtration enclosure comprises a plurality of first spacer strips spaced apart from each other, said second filtration enclosure comprises a plurality of second spacer strips spaced apart from each other, each said first spacer strip intersecting with each said second spacer strip in a corresponding manner. This definition also means that it is not a depth filtration.

US 2023369718 A1 describes a filtering assembly for a battery area of a traction battery and a filtering method. The assembly contains a filter layer blocking a flow of particulates vented from the at least one battery cell to the area outside the battery housing. The filter layer consists of a multilayer structure having the filter layer and at least one support layer.

### Summary

It is an object of the embodiments to provide an improved filter device for filtering a fluid stream of a battery housing, in particular of a traction battery of a motor vehicle.

Another object is to provide a battery housing, in particular of a traction battery of a motor vehicle, with a pressure relief valve and an improved filter device for filtering a fluid stream.

According to an aspect of the embodiments the object is achieved by a filter device for filtering a fluid stream of a battery housing, in particular of a traction battery of a motor vehicle, the filter device comprising a circumferential extending cover comprising a fluid passage and surrounding an interior space, and a filter element at least partially filling the interior space, the fluid passage being for fluid passing through the filter element. The cover is configured to accommodate a seat for the filter element via a circumferential extending filter sealing element, and to accommodate a seat for a circumferential extending sealing element.

According to a further aspect of the embodiments the other object is achieved by a battery housing, in particular of a traction battery of a motor vehicle, the battery housing comprising a pressure relief valve, the filter device, and at least one opening. The pressure relief valve is mounted at the at least one opening and is configured to open the fluid passage of the cover of the filter device, when a predetermined excess pressure in the battery housing is reached or exceeded. A rear side of the cover is mounted in a substantially fluid tight manner to the at least one opening.

Advantageous embodiments are described in the dependent claims, the description and the drawings.

The main function of the filter element is to capture fine thereby harmful and hazardous particles and/or gases caused by a malfunction of at least one battery cell inside the battery housing. So the fine dust depth filter serves to effectively prevent this and keep the fine particles inside the filter element and thus in the interior of a battery housing. Due to the high temperatures of the fluid stream, which may be equal to or greater than 200 °C, the filter element itself is made of an adequate heat resistance material, as glass, metal, ceramics, or a combination of these materials. The filter medium can have a single-layer structure or a multi-layer structure. It can be a plane element or can be pleated to enlarge the surface. In order to fulfil its function, it may be present in a sufficiently gas-permeable form as fibers, nonwoven materials, fabrics, needle mats, foams, porous or microporous structures. Advantageously, a pollution of the environment after malfunction of at least one battery cell of the battery electric storage system may be avoided.

According to the embodiments, the cover may comprise a shoulder configured to directly or indirectly support the filter sealing element for sealing the filter element. Advantageously, the filter element may be sealed against the cover of the filter device. Thus, a fluid stream bypassing the filter element may be avoided.

According to embodiments, the filter device may further comprise a filter support element supporting the filter element at a downstream side against a flow of the fluid. The filter support element may be an integrated part of the cover, in particular for an arrangement of the filter device inside the battery housing, or may be a separate component that is fixed to the cover.

The filter element may be connected to the filter support element by the filter sealing element. The filter device may further comprise a circumferential sealing support element arranged between the filter sealing element and the shoulder and configured to support the filter sealing element. The filter device may further comprise an intermediate plate extending from the filter support element. The filter sealing element may be compressed between the sealing support element and the intermediate plate. Alternatively, the filter device may further comprise an intermediate plate, and the filter sealing element may be compressed between the shoulder and the intermediate plate. This ensures that the particles and / or the gases cannot bypass the filter. Advantageously, this filter sealing element can be installed in an area that does not come into direct contact with the hot fluid stream. The filter sealing element can be made of an elastomer, or a thermoplastic elastomer, or a thermoplastic material. The thermoplastic material may be realized by a plastic overmolded filter element. This requires an additional gasket.

It may also be necessary to support the filter element at the downstream side against the fluid flow. This filter support element advantageously may be made of an adequate heat resistant material as a high performance plastic or metal. It can be spaced at a sufficiently small distance from the filter element or can be completely or locally in direct contact with the filter element. Further, the filter support element can have an interface to the filter sealing element of the filter element to fix the filter support element to the cover. Advantageously, the intermediate plate may be used to optimize the needed compression of the circumferential filter sealing element.

According to the embodiments, the cover may further comprise a fluid outlet in a circumferential direction. Thus, the filtered fluid stream may exit to the environment without any harmful particles. Alternatively, the cover may further comprise a fluid inlet in an axial direction. The filter device may further comprise a separation screen comprising screen openings across the fluid passage. The separation screen advantageously serves for preventing particles to enter the fluid passage, for example, during degassing of battery cells caused by a malfunction of the battery cells. Thus, comparatively large particles may be prevented from reaching and therefore blocking the filter element.

According to the embodiments, the cover may further comprise a circumferential rim configured to accommodate the seat for the sealing element configured to be arranged circumferentially between the rim and the battery housing. By this way, the cover may be mounted to an opening of a battery housing in a substantially fluid tight manner providing a fluid permeable fluid passage for venting.

According to the embodiments, the filter device may further comprise a at least one labyrinth element configured to protect the fluid outlet against environmental impacts, such as water streams, stone chipping, etc.

The proposed battery housing comprises a pressure relief valve, and a filter device, comprising a cover with a circumferentially extending rim which is provided for coupling to the battery housing. The cover comprises at least one fluid inlet and at least one fluid outlet. For an inside the battery housing installed filter device, the fluid outlet can be realized as a simple opening, and the cover comprises at least one separation screen with screen openings engaging across the fluid inlet. For an outside the battery housing installed filter device the pressure relief valve may comprise the at least one separation screen with screen openings engaging across the fluid inlet opening, and the fluid outlet may be protected against environmental impacts, such as water streams, stone chipping, etc. The filter device is arranged in a fluid flow direction fluidically downstream of the separation screen, comprising a filter element engaging across the fluid outlet and a sealing element engaging across the fluid outlet that connects the filter device and the battery housing in a tight manner. The inside the battery housing installed filter device can advantageously cover at least one pressure relief valve that is configured to open when a predetermined excess pressure in the housing is reached or exceeded.

Advantageously, fine thereby harmful and hazardous particles and/or gases caused by a malfunction of at least one battery cell inside the battery housing may be captured. So the fine dust depth filter serves to effectively prevent the pollution of the environment and keep the fine particles inside the filter element and thus in the interior of the battery housing.

According to the embodiments, the cover may be installed outside the battery housing, and the filter device may further comprise a separation screen comprising screen openings across the at least one opening, the separation screen being mounted to the pressure relief valve. The pressure relief valve may be arranged between the separation screen and the filter element. The separation screen advantageously serves for preventing particles to enter the fluid passage, e.g., during degassing of battery cells during a malfunction of the battery cells. Thus, comparatively large particles may be prevented from reaching and therefore blocking the filter element.

According to the embodiments, the pressure relief valve may be at least partly accommodated in the interior space of the cover. A compact arrangement of the pressure relief valve inside the filter device may be achieved thus saving space in the interior of the battery housing.

According to the embodiments, the cover may be installed inside the battery housing, and the filter device may further comprise a separation screen arranged at the cover. The separation screen advantageously serves for preventing particles to enter the fluid passage. Thus, comparatively large particles may be prevented from reaching and therefore blocking the filter element.

According to the embodiments, the separation screen may comprise screen openings across the fluid passage of the cover. Advantageously, particles in the fluid stream may be prevented from entering the fluid passage.

According to the embodiments, the battery housing may further comprise a second opening, and an overpressure valve arranged at the second opening. The overpressure valve may be configured to open at a higher pressure level than the pressure relief valve and to provide a bypass fluid flow path from an interior of the battery housing to an environment, the bypass fluid flow path bypassing at least the filter element. An optional overpressure valve can be installed for preventing of the battery housing if the pressure inside the battery housing will rise inadmissibly caused by a wholly or partially clogging of the filter device.

### Brief Description of Drawings

The present embodiments together with the above-mentioned and other objects and advantages may best be understood from the following detailed description of the embodiments, but not restricted to the embodiments, wherein is shown in.
Figure 1 is a part of a battery housing, in particular of a traction battery of a motor vehicle, with a pressure relief valve and a filter device for filtering a fluid stream, according to embodiments, in an isometric view from an interior side.
Figure 2 is the battery housing according to Fig. 1 from an outer side.
Figure 3 is the battery housing from the interior side with sectional planes A-A and C-C indicated.
Figure 4 is a sectional view of the battery housing according to sectional plane C-C in Fig. 3 with a sectional plane D-D indicated.
Figure 5 is a sectional view of the battery housing according to sectional plane A-A in Fig. 3.
Figure 6 is a sectional view of the battery housing according to sectional plane D-D in Fig. 4 with a detail X of a filter device indicated.
Figure 7 is the detail X of the filter device according to Fig. 6.
Figure 8 is a part of a battery housing according to further embodiments, in an isometric view from an outer side.
Figure 9 is the battery housing according to Fig. 8 from an interior side.
Figure 10 is the battery housing from the outer side with sectional planes A-A and C-C indicated.
Figure 11 is a sectional view of the battery housing according to sectional plane C-C in Fig. 10 with a sectional plane D-D indicated.
Figure 12 is a sectional view of the battery housing according to sectional plane A-A in Fig. 10.
Figure 13 is a sectional view of the battery housing according to sectional plane D-D in Fig. 11 with a detail X of a filter device indicated.
Figure 14 is the detail X of the filter device according to Fig. 13.

### Detailed Description

In the drawings, like elements are referred to with equal reference numerals. The drawings are merely schematic representations, not intended to portray specific parameters of the embodiments. Moreover, the drawings are intended to depict only typical embodiments and therefore should not be considered as limiting the scope of the embodiments.

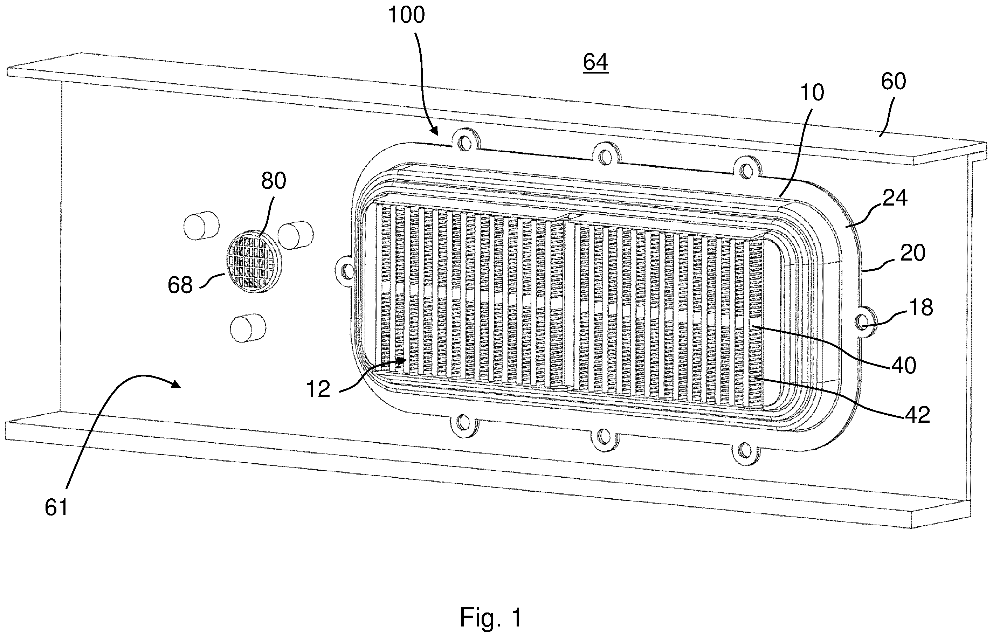

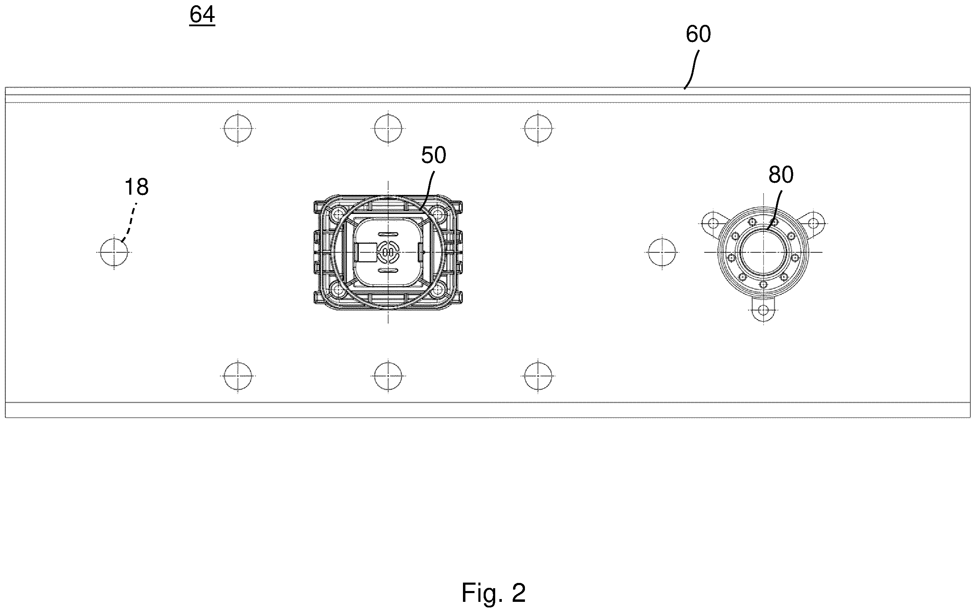

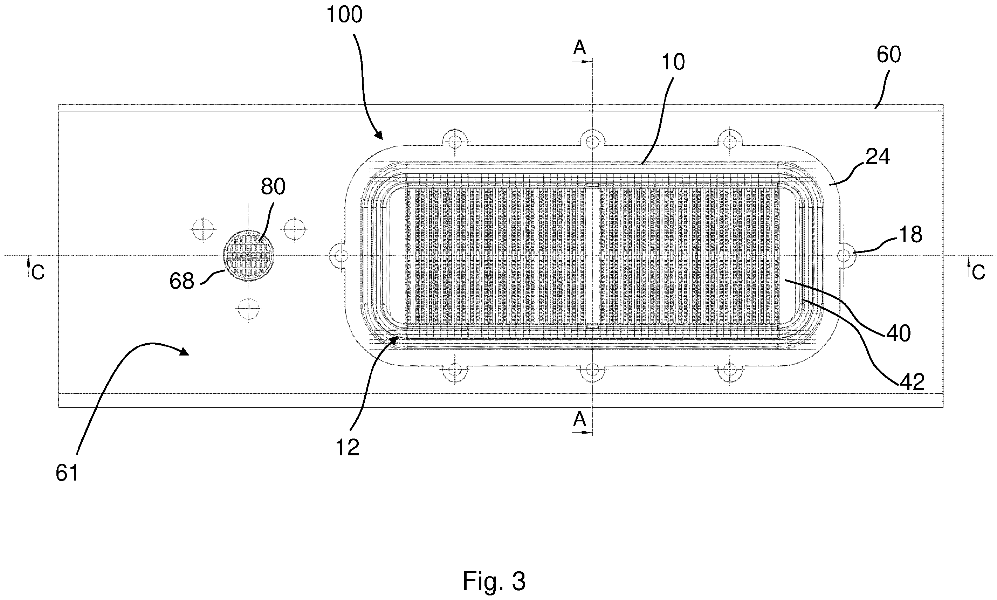

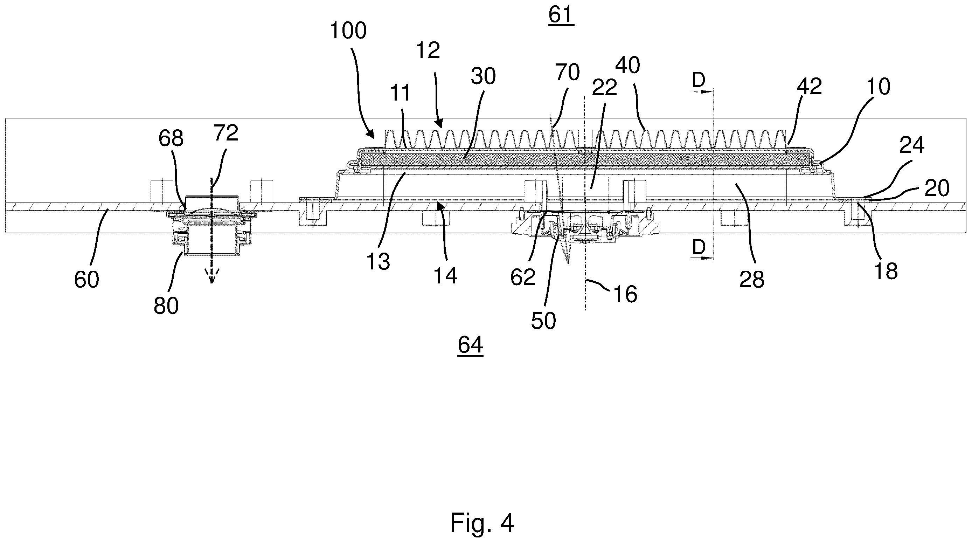

Figure 1 depicts a part of a battery housing 60, in particular of a traction battery of a motor vehicle, with an overpressure valve 80 and a filter device 100 for filtering a fluid stream, according to embodiments, in an isometric view from an interior side. In Figure 2 the battery housing 60 is depicted from an outer side, whereas Figure 3 depicts the battery housing 60 from the interior side with sectional planes A-A and C-C indicated. Figure 4 shows a sectional view of the battery housing 60 according to sectional plane C-C in Figure 3 with a sectional plane D-D indicated. In the Figures only part of the battery housing 60 with a housing wall is depicted.

As particularly may be seen from Figure 4, the battery housing 60 has one opening 62, where the pressure relief valve 50 is mounted. The pressure relief valve 50 is configured to open a fluid passage 22 when a predetermined excess pressure in the battery housing 60 is reached or exceeded.

The filter device 100 comprises a circumferential extending cover 10 with a fluid passage 22 and surrounding an interior space 28 which is at least partially filled with a filter element 30. The cover 10 is configured to accommodate a seat for the filter element 30 via a circumferential extending sealing element 20 and a cover 26 providing the fluid passage 22 for the fluid passing through the filter element 30.

The filter device 100 is mounted with a rear side 14 in a substantially fluid tight manner to the opening 62. Thus the filter element 30 closes the fluid passage 22.

A separation screen 40 with screen openings 42 is arranged in a fluid flow direction 70 upstream of the filter element 30. The separation screen 40 may be mounted on top of the cover 26 thus being fixed to the cover 10. The screen openings 42 of the separation screen 40 engage across the fluid passage 22 of the filter device 100.

The cover 26 has a fluid inlet 11 and a fluid outlet 13 in axial direction 16 enabling the fluid flow through the separation screen 40 and the filter element 30 in the fluid flow direction 70.

If the pressure inside the battery housing 60 rises and exceeds the predetermined excess pressure the pressure relief valve 50 opens and the venting gas stream may stream from the interior 61 of the battery housing 60 towards the environment 64 as indicated by the arrow of the fluid flow direction 70. Hereby the venting gas passes first the separation screen 40 through the screen openings 42 wherein particles with a larger diameter than the screen openings 42 are filtered by the separation screen. Next the venting gas passes the filter element 30 of the filter device 100 where file thereby harmful and hazardous particles and/or gases are captured by the fine dust depth filtration of the filter element 30.

The battery housing 60 further comprises a second opening 68, where the overpressure valve 80 is arranged. The overpressure valve 80 is configured to open at a higher pressure level than the pressure relief valve 50 and provides a bypass fluid flow path 72 from an interior 61 of the battery housing 60 to an environment 64, thus bypassing the filter element 30.

In the embodiments shown in Figures 1 to 7, the cover 10 is installed inside the battery housing 60, wherein the separation screen 40 is arranged at the cover 10 closing the fluid passage 22.

In Figure 1, depicting the battery housing 60 from the inside, the cover 10 is to be seen with a view on top of the separation screen 40. The screen openings 42 are to be recognized e.g. as slits of the folded metal sheet of the separation screen 40 on lateral sides of the separation screen 40.

The cover 10 has a circumferential rim 24 which is a seat for a sealing element 20 being arranged circumferentially between the rim 24 of the cover 10 and the battery housing 60. Thus the cover 10 may be mounted in a fluid tight manner to the battery housing 60 using mounting elements 18 arranged at the rim 24. Mounting elements 18 may be holes in the rim 24 for arranging screws or bolts in order to fix the cover 10 to the wall of the battery housing 60.

Further, the second opening 68 is to be seen in Figure 1 with the overpressure valve 80 mounted.

In Figure 2, depicting the battery housing 60 from the outside, only the pressure relief valve 50 as well as the overpressure valve 80 mounted to the outside of the wall of the battery housing 60 are to be seen.

Figure 3 is a top view from the inside of the battery housing 60, comparable to the isometric view of Figure 1.

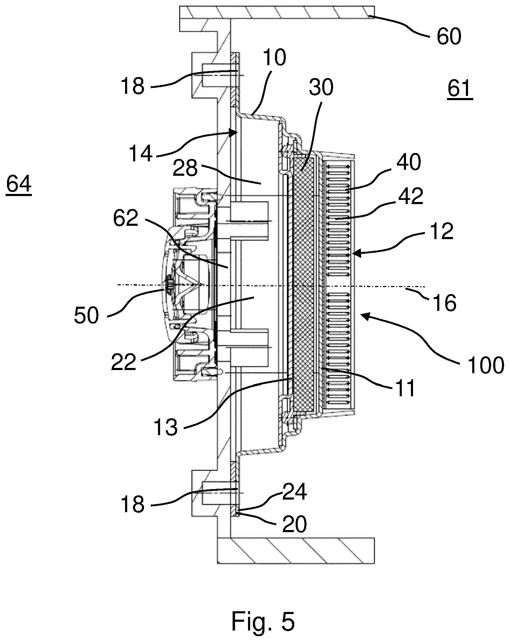

Figure 5 shows a sectional view of the battery housing 60 according to sectional plane A-A in Figure 3.

This sectional view is a central sectional view through the pressure relief valve 50 and the filter device 100. It may be recognized that the cover 10 enables accommodating the pressure relief valve 50 at least partly so that at least mounting elements of the pressure relief valve 50 may extend into the interior space 28 of the cover 10.

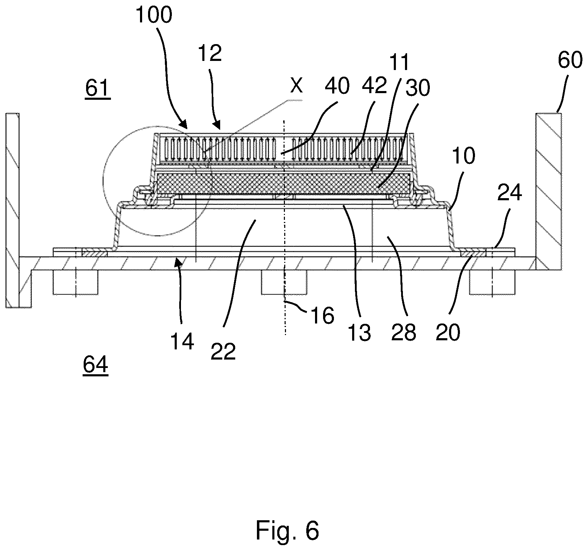

Figure 6 depicts a sectional view of the battery housing 60 according to sectional plane D-D in Figure 4 with a detail X of a filter device indicated.

In this sectional view, the pressure relief valve 50 is not to be seen, whereas the cross section of the filter device 100 is the same as in the sectional view shown in Figure 5.

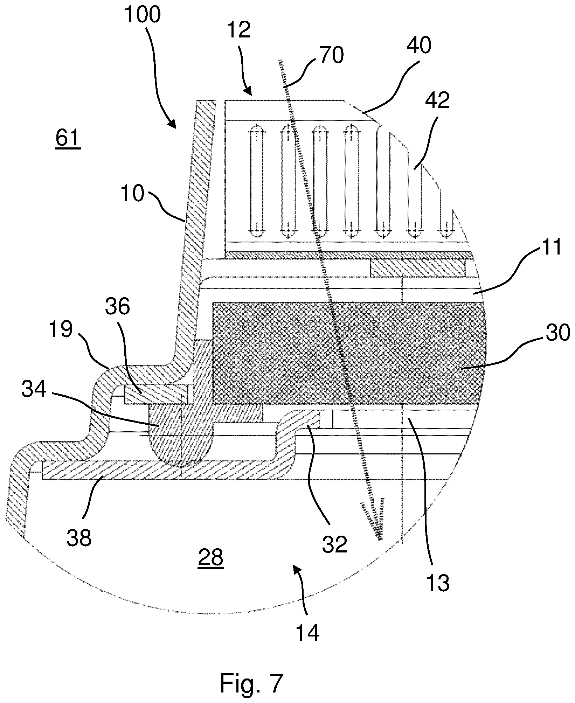

In Figure 7 the detail X of the filter device 100 according to Figure 6 is depicted where mounting of the filter element 30 to the cover 10 may be recognized.

The filter element 30 is provided with a circumferential filter sealing element 34 in order to prevent bypasses for the venting gas streaming in the fluid flow direction 70.

The cover 10 has a shoulder 19 which directly or indirectly supports the filter sealing element 34 for sealing the filter element 30.

Further, the cover 10 provides a filter support element 32, which supports the filter element 30 at the downstream side against the fluid flow. The filter support element 32 is directly integrated in a sealing support element 36. A circumferential intermediate plate 38 is arranged between the filter sealing element 34 and the shoulder 19, by this way optimizing the needed compression of the filter sealing element 34.

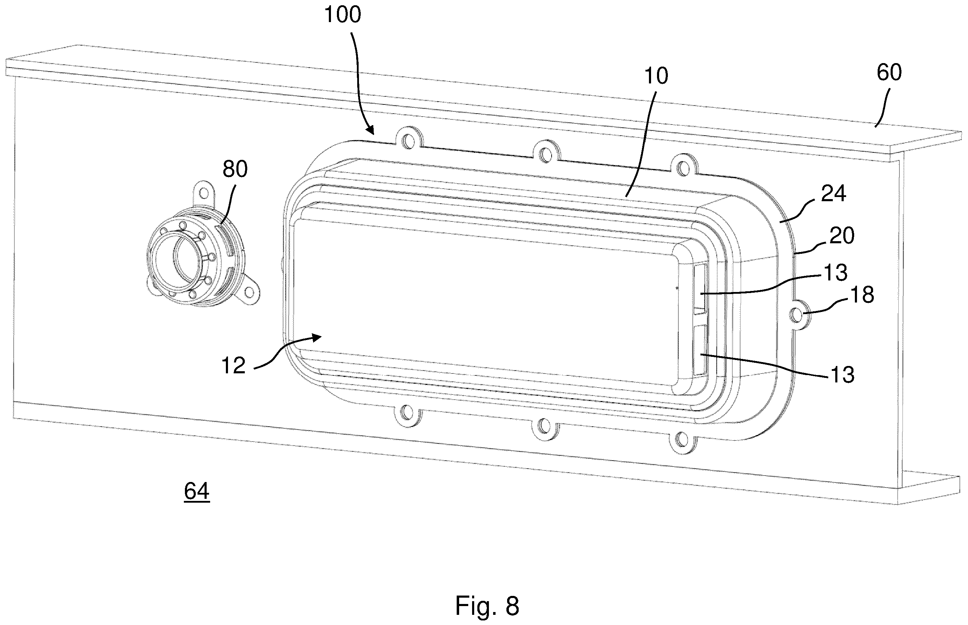

In Figures 8 to 14 a battery housing 60 according to further embodiments is shown.

Figure 8 depicts a part of the battery housing 60, in an isometric view from an outer side.

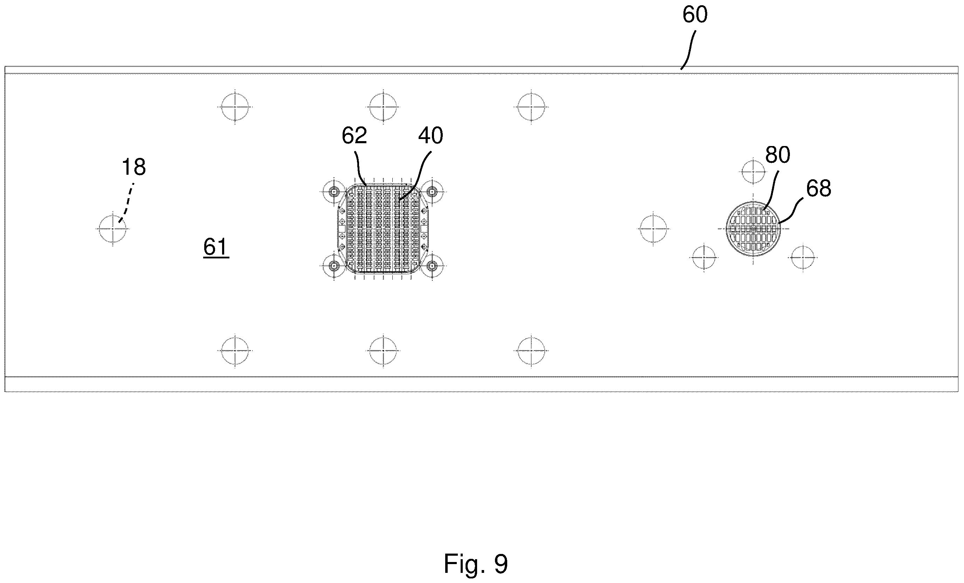

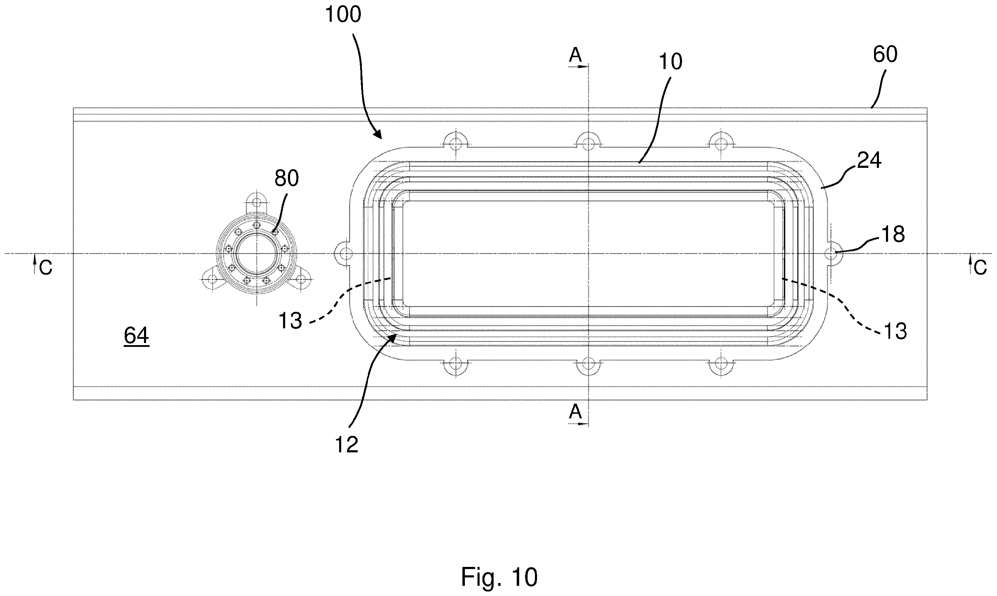

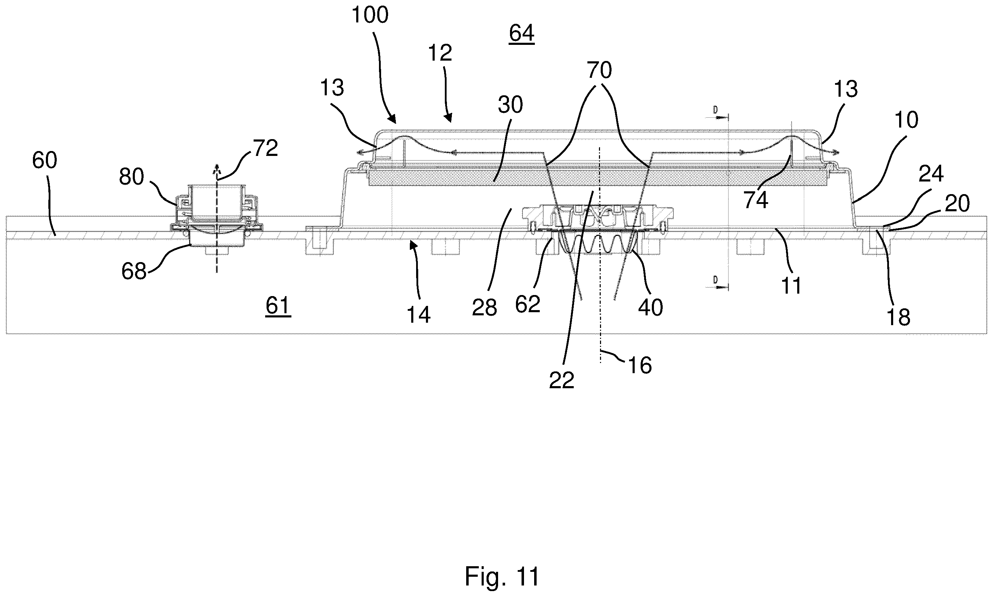

Figure 9 depicts the battery housing 60 from an interior side, whereas in Figure 10 the battery housing 60 is shown from the outer side with sectional planes A-A and C-C indicated. Figure 11 depicts a sectional view of the battery housing 60 according to sectional plane C-C in Figure 10 with a sectional plane D-D indicated.

As particularly may be seen from Figure 11, in these embodiments, the cover 10 is installed outside the battery housing 60, extending into the environment. The separation screen 40 is arranged at the opening 62 of the battery housing 60. The pressure relief valve 50 is arranged between the separation screen 40 and the filter element 30. In particular, the separation screen 40 may be mounted directly to the pressure relief valve 50.

The pressure relief valve 50 is also mounted on the outside of the wall of the battery housing 60 and is at least partly accommodated in the interior space 28 of the cover 10.

In these embodiments, the cover 10 is in axial direction 16 impermeable for the venting gas and has only fluid outlets 13 in circumferential direction. Thus, the fluid flow direction is forced to make deviations. If the pressure inside the battery housing 60 rises and exceeds the predetermined excess pressure the pressure relief valve 50 opens and the venting gas stream may stream from the interior 61 of the battery housing 60 towards the environment 64 as indicated by the arrow of the fluid flow direction 70. The venting first passes the separation screen 40 for filtering the larger particles, then passes the open pressure relief valve 50, and then streams through the fine dust filter element 30.

At the cover 10, the venting gas is deviated to the fluid outlets 13 at circumferential sides of the cover 10, leaving into the environment 64. Labyrinth elements 74 are arranged adjacent to the fluid outlets 13 and protect the fluid outlets 13 against environmental impacts, such as water streams, stone chipping, etc.

In Figure 8, depicting the battery housing 60 from the outside, the cover 26 is to be seen with fluid outlets 13 on the sides of the cover 26. The cover 26 resembles in its shape the embodiments shown in the Figures 1 to 7 and is mounted in the same way to the battery housing 60.

Further, the overpressure valve 80 mounted at the second opening 68 is to be seen in Figure 8.

In Figure 9, depicting the battery housing 60 from the inside, only the separation screen 40 at the opening 62 as well as the overpressure valve 80 mounted to the outside of the wall of the battery housing 60 are to be seen.

Figure 10 is a top view from the outside of the battery housing 60, comparable to the isometric view of Figure 8.

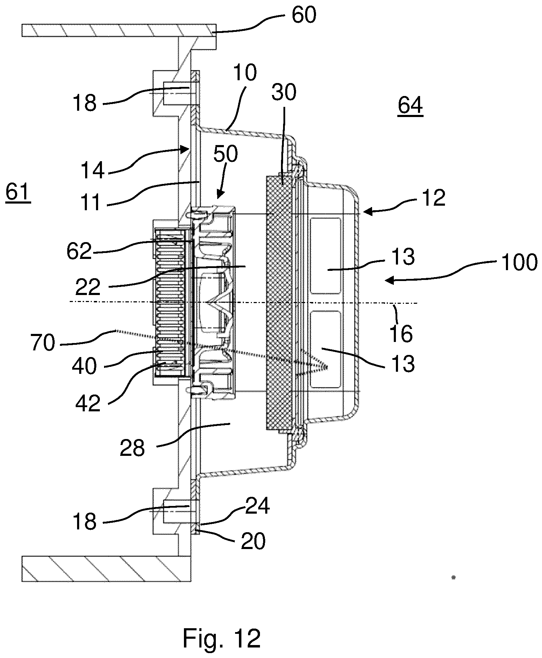

Figure 12 shows a sectional view of the battery housing 60 according to sectional plane A-A in Figure 10.

This sectional view is a central sectional view through the pressure relief valve 50 and the filter device 100. It may be recognized that the cover 10 enables accommodating the pressure relief valve 50 so that the pressure relief valve 50 may extend into the interior space 28 of the cover 10. The separation screen 40 is arranged at the opening 62 from the interior 61 of the battery housing 60. Hereby the separation screen 40 may be mounted to the pressure relief valve 50.

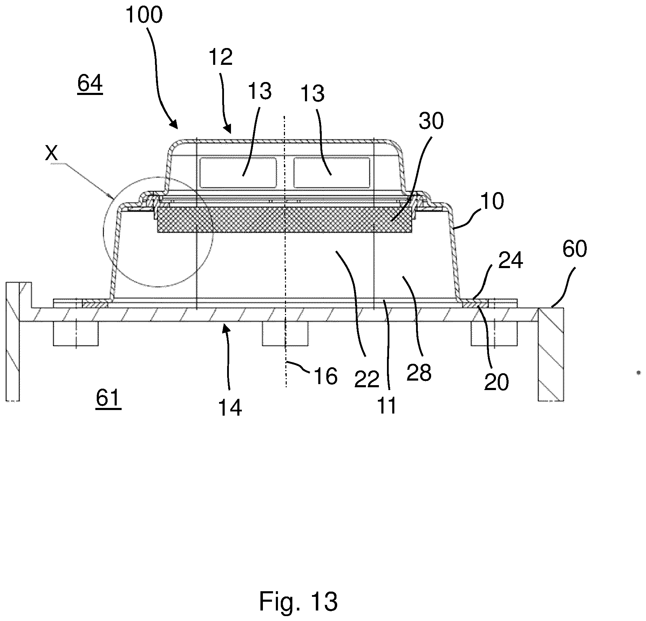

Figure 13 depicts a sectional view of the battery housing 60 according to sectional plane D-D in Figure 11 with a detail X of a filter device indicated.

In this sectional view, the pressure relief valve 50 is not to be seen, whereas the cross section of the filter device 100 is the same as in the sectional view shown in Figure 12.

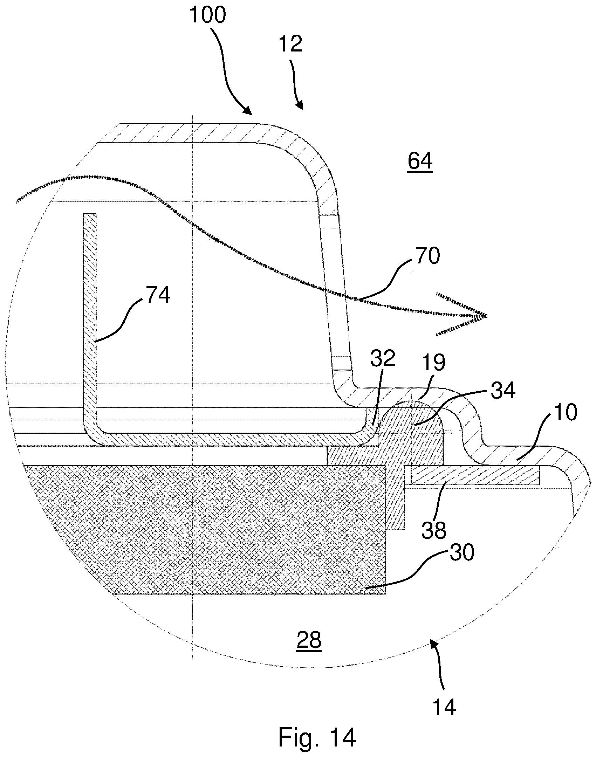

Figure 14 depicts the detail X of the filter device 100 according to Figure 13.

As in the previous embodiments, the filter element 30 is provided with the circumferential filter sealing element 34 in order to prevent bypasses for the venting gas streaming in the fluid flow direction 70.

The cover 10 has the shoulder 19 which directly supports the filter sealing element 34 for sealing the filter element 30.

The filter support element 32 serves as the seat for the filter sealing element 34 of the filter element 30. The filter element 30 may be connected to the filter support element 32 by the filter sealing element 34. The intermediate plate 38 is arranged compressing the filter sealing element 34 in axial direction 16 toward the shoulder 19, thus optimizing the needed compression of the filter sealing element 34 and thus fixing the filter element 30 to the cover 10 in an axial direction.

The labyrinth element 74 extend from the filter support element 32 to be substantially parallel to the fluid outlet 13, thus protecting the fluid outlet 13 against environmental impacts, such as water streams, stone chipping, etc.

### Reference Signs List

- 10: cover
- 11: fluid inlet
- 12: front side
- 13: fluid outlet
- 14: rear side
- 16: axial direction
- 18: mounting element
- 19: shoulder
- 20: sealing element
- 22: fluid passage
- 24: rim
- 28: interior space
- 30: filter element
- 32: filter support element
- 34: filter sealing element
- 36: sealing support element
- 38: intermediate plate
- 40: separation screen
- 42: screen opening
- 50: pressure relief valve
- 60: battery housing
- 61: interior
- 62: opening
- 64: environment
- 66: housing
- 68: second opening
- 70: fluid flow direction
- 72: bypass fluid flow path
- 74: labyrinth element
- 80: overpressure valve
- 100: filter device

## Claims

1. A filter device (100) for filtering a fluid stream of a battery housing (60), in particular of a traction battery of a motor vehicle, the filter device (100) comprising:
a circumferential extending cover (10) comprising a fluid passage (22) and surrounding an interior space (28); and
a filter element (30) at least partially filling the interior space (28), the fluid passage (22) being for fluid passing through the filter element (30),
wherein the cover (10) is configured to accommodate a seat for the filter element (30) via a circumferential extending filter sealing element (34), and to accommodate a seat for a circumferential extending sealing element (20).

2. The filter device (100) according to claim 1, wherein the cover (10) comprises a shoulder (19) configured to directly or indirectly support the filter sealing element (34) for sealing the filter element (30).

3. The filter device (100) according to claim 1 or 2, further comprising a filter support element (32) supporting the filter element at a downstream side against a flow of the fluid.

4. The filter device (100) according to claim 3, wherein the filter element (30) is connected to the filter support element (32) by the filter sealing element (34).

5. The filter device (100) according to claim 3, further comprising:
a circumferential sealing support element (36) arranged between the filter sealing element (34) and the shoulder (19) and configured to support the filter sealing element (34); and
an intermediate plate (38) extending from the filter support element (32),
wherein the filter sealing element (34) is compressed between the sealing support element (36) and the intermediate plate (38).

6. The filter device (100) according to claim 3, further comprising an intermediate plate (38),
wherein the filter sealing element (34) is compressed between the shoulder (19) and the intermediate plate (38).

7. The filter device (100) according to any one of the preceding claims, wherein the cover (10) further comprises a fluid outlet (13) in a circumferential direction, or
wherein the cover (10) further comprises a fluid inlet (11) in an axial direction (16).

8. The filter device (100) according to any one of the preceding claims, wherein the cover (10) further comprises a circumferential rim (24) configured to accommodate the seat for the sealing element (20) configured to be arranged circumferentially between the rim (24) and the battery housing (60).

9. The filter device (100) according to claim 7, further comprising at least one labyrinth element (74) configured to protect the fluid outlet (13) against environmental impacts.

10. A battery housing (60), in particular of a traction battery of a motor vehicle, the battery housing (60) comprising:
a pressure relief valve (50);
the filter device (100) according to any one of the preceding claims; and
at least one opening (62),
wherein the pressure relief valve (50) is mounted at the at least one opening (62) and is configured to open the fluid passage (22) of the cover (10) of the filter device (100), when a predetermined excess pressure in the battery housing (60) is reached or exceeded, and
wherein a rear side (14) of the cover (10) is mounted in a substantially fluid tight manner to the at least one opening (62).

11. The battery housing (60) according to claim 10, wherein the cover (10) is installed outside the battery housing (60), and
wherein the filter device (100) further comprises a separation screen (40) comprising screen openings (42) across the at least one opening (62), the separation screen (40) being mounted to the pressure relief valve (50), and
wherein the pressure relief valve (50) is arranged between the separation screen (40) and the filter element (30).

12. The battery housing (60) according to claim 11, wherein the pressure relief valve (50) is at least partly accommodated in the interior space (28) of the cover (10).

13. The battery housing (60) according to claim 10, wherein the cover (10) is installed inside the battery housing (60), and
wherein the filter device (100) further comprises a separation screen (40) arranged at the cover (10).

14. The battery housing (60) according to claim 13, wherein the separation screen (40) comprises screen openings (42) across the fluid passage (22) of the cover (10).

15. The battery housing (60) according to any one of claims 10 to 14, further comprising:
a second opening (68); and
an overpressure valve (80) arranged at the second opening (68) and configured to open at a higher pressure level than the pressure relief valve (50) and to provide a bypass fluid flow path (72) from an interior (61) of the battery housing (60) to an environment (64), the bypass fluid flow path (72) bypassing at least the filter element (30).
